# EUROPEAN PATENT APPLICATION

(11) **EP 0 628 916 A1**
(43) Date of publication of application: **14.12.1994**
(21) Application number: 94303540.2
(22) Date of filing: 18.05.1994
(51) Int. Cl.: G06F 13/42, G06F 15/78

(54) **Microprocessor with multiplexed and non-multiplexed address/data busses**

(30) Priority: 28.05.1993 US 70148
(71) Applicant: AT&T Corp., New York, NY 10013-2412 (US)
(72) Inventor: Asnaashari, Mehdi, San Jose, California 95124 (US)
(74) Representative: Watts, Christopher Malcolm Kelway, Dr.

(57) **Abstract**

Typical prior-art microprocessors use separate (i.e., non-multiplexed) address and data busses, or else a single multiplexed address/data bus, to communicate with external devices (e.g., memory chips). The use of separate busses provides for high speed operation, whereas the use of a multiplexed bus provides for a reduced number of pins for both the microprocessor and the IC's that communicate with it over the bus. In the present invention, a microprocessor (100) includes both a non-multiplexed address-only bus (101), as well as a multiplexed address/data bus (102). The multiplexed bus provides for communication with external devices (105, 106) that require a multiplexed bus, typically for reduced pin count of the external device. The non-multiplexed address bus provides for ease of interfacing with memory (103, 104, 107) or other devices, by avoiding the necessity of an address latch.

## Description

### Background of the Invention

### Field of the Invention

The present invention relates to integrated circuit (IC) processors and systems that utilize them.

### Description of the Prior Art

One type of prior-art microprocessor uses a multiplexed address/data bus, wherein addresses and data are time multiplexed on the same bus conductors. For example, the Intel 8086 includes 20 pins for transmitting addresses (A0 - A19) over a 20-conductor bus. In addition, 16 data bits (D0 - D15) are multiplexed onto 16 of these same pins, whereas 4 status bits (S3 - S6) are multiplexed onto the remaining 4 pins. This design allows for minimizing the number of bus conductors, and hence for minimizing the number of integrated circuit terminals (e.g., pins as packaged) that must be devoted to connecting to the bus. Note that the pin count is reduced for both the microprocessor and for the devices with which it communicates over the multiplexed bus. This is significant in that the package size of at least some of the ICs on the bus may be reduced as compared to those for use with separate address/data busses, since the pin count is reduced. The reduction in package size is especially advantageous in systems where circuit board space is at a premium; for example, in laptop computers, personnel communication systems, cellular phones, and other portable apparatus.

However, the devices on a multiplexed bus must include some means for separating the address portion of the signals on the bus from the data portion. This is typically accomplished using latches that are clocked by a system clock so as to capture only the address portion of the bus signals. In some cases, the latches may be readily included in the IC being addressed. However, in other cases, especially in some types of memory devices, latches are not normally included in the IC itself, requiring an extra IC for implementing the latch. The extra space required for this latch at least partially defeats the space-savings gained by the use of the multiplexed bus, and the latch adds to the system cost.

Another type of prior-art microprocessor uses separate (i.e., non-multiplexed) address and data busses to communicate with external devices. Such external devices may include memory chips, input/output devices, or other logic chips, for example. The use of separate busses provides for high speed operation, since addresses and data may simultaneously be transmitted. Furthermore, there is no ambiguity as to which type of information is present on the bus, and so the information may be used by the destination device at any time that the logic levels are valid. Therefore, an address latch is typically not necessary. An example of this type of design is the Motorola 68000 series of microprocessors. Still another type of microprocessor can be programmed to perform either with multiplexed or non-multiplexed busses. For example, the Motorola 6801 can operate in an 'expanded multiplexed' mode, wherein pins P30 - P37 provide multiplexed data bits D0 - D7 and address bits A0 - A7, and pins P40 - P47 provide address bits A8 - A15. Alternatively, the 6801 can operate in 'expanded non-multiplexed mode', wherein pins P30 - P37 provide only the data bits D0 - D7, and pins P40 - P47 provide address bits A0 - A7.

### Summary of the Invention

I have invented an integrated circuit processor, and system including such a processor, that includes terminals for connecting to a multiplexed address/data bus, and additionally to a non-multiplexed address bus. The addresses at least partially overlap on the busses, with typically the lower-order address bits being present on both busses.

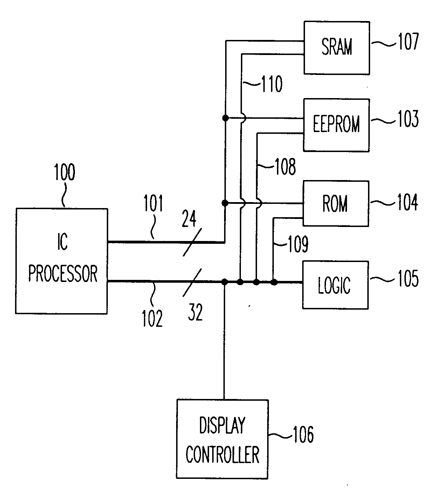

### Brief Description of the Drawing

The Figure shows an illustrative embodiment of the invention.

### Detailed Description

The following detailed description relates to an integrated circuit processor and system that utilizes both a multiplexed and non-multiplexed address bus. The term 'microprocessor' is used illustratively herein, although the integrated circuit processor that implements the invention may be a microcontroller, digital signal processor, or other form of logic device that includes address and data bus functions. The present invention is especially advantageous when the size of the IC processor 'chip' requires a package size larger than that required to implement only a multiplexed address/data bus. That is, if the IC processor package is not 'pin limited' when implementing only a multiplexed address/data bus, then additional pins may be provided and used without necessarily increasing the package size. In the inventive technique, the additional pins are advantageously used in implementing a separate non-multiplexed address bus. However, the present invention may be used even if the IC processor is unpackaged at the chip level. For example, solder bumps or other forms of connections may be used to connect the IC processor chip with the external bus conductors, as in the case of multi-chip modules (MCMs). The busses typically comprise electrical conductors, but may include optical conductors in addition to, or in lieu of, the electrical conductors.

Referring to the Figure, an illustrative embodiment of the invention is shown. This embodiment is suitable for use in a portable computing environment, but numerous other component configurations and system applications are possible. A microprocessor 100 includes terminals for connecting to a non-multiplexed address bus 101 and a multiplexed address/data bus 102. The address-only bus 101 connects to various memory devices, being illustratively a flash EEPROM (electrically erasable programmable read-only memory) 103, a ROM (read-only memory) 104, and a SRAM (static random access memory) 107. With the inventive technique, these memory devices do not need an input latch to capture the address information, since only address information is present on the bus 101. Hence, a saving in cost and circuit board area is obtained. The multiplexed bus 102 is connected to a logic device 105, which illustratively includes a serial port controller, PCMCIA controller, and main memory controller. The bus 102 is also connected to a device 106, which illustratively implements the function of a display controller. With the inventive technique, the devices 105 and 106 can have a reduced number of terminals due to the availability of the multiplexed bus 102, as compared to systems that have only separate address and data busses. Therefore, the package size for devices 105 and 106 can typically be smaller, due to the reduced number of pins required. This provides for a smaller circuit board area, and reduced package and circuit board costs. Alternatively, more functionality may be built into the devices 105 and 106 for a given size package.

The number of conductors in the non-multiplexed address bus 101 is illustratively 24, for supplying address bits A0 - A23. The number of conductors in the multiplexed address/data bus 102 is illustratively 32, for supplying address bits A0 - A31. Hence, 24 address bits may be supplied by bus 101, whereas the multiplexed bus 102 may provide 32 address bits, and 32 data bits. For example, 24 address bits may be supplied via bus 101 to the EEPROM 103 and ROM 104. Alternatively or additionally, a relatively fast SRAM (static random access memory) cache type of memory 107 may be connected to bus 101. Up to 32 address bits may be supplied via multiplexed bus 102 to the logic circuit 105 and display controller 106. The logic circuit 105 may include, for example, a memory controller that may make use of some, or all 32 address bits for accessing a main memory (not shown). The memory controller usually reads and writes information to main memory in 32 bit wide data words, which may also be supplied from multiplexed bus 102. The display controller 106 may be supplied with 32 data bits at a time from multiplexed bus 102. Note also that the various memories (103, 104, 107) may transfer data in 32 bit wide paths to the IC processor 100 via the multiplexed data bus 102, via bus segments 108, 109, and 110, respectively.

Other bus sizes are possible, wherein different numbers of conductors are provided than in the illustrative case. However, it can be seen that the number of conductors in the multiplexed address/data bus is typically at least equal to the number of conductors in the non-multiplexed address bus. In most cases, the lower-order address bits (e.g., A0 - A23) overlap so as to be present on both busses. However, the multiplexed bus may include additional higher-order bits (e.g., A24 - A31). These 'upper' address bits may be used for memory mapping. For example, they may be used for choosing among various types of memory, or various banks of main memory, which is typically implemented with DRAM (dynamic random access memory) chips. The memory mapping may also be used to choose the PCMIA or display controller, for example. While the multiplexed bus 102 is shown as supplying data bits as well as address bits, other combinations are possible. For example, status bit may be multiplexed with the address bits on at least some of the bus conductors. All information that is not address information is considered 'data' as the term is used hereafter. In addition to the busses illustrated, various other conductors (not shown) provide power supply voltages and various timing and logic signals to the IC processor, and from the IC processor to various other devices, as may be required to implement a given system. While the memory and logic integrated circuits in the Figure are illustrative, not all of these types are necessary in a given system. Furthermore, other types may be used in lieu of the illustrated types in various other systems.

## Claims

1. An integrated circuit comprising a processor (100) that provides addresses and data to external devices,
Characterized in that said integrated circuit includes a first set of terminals for providing only addresses to a first bus (101), and additionally includes a second set of terminals for providing both said addresses and said data in time multiplexed form to a second bus (102).

2. The integrated circuit of claim 1 wherein the number of terminals of said second set is equal to the number of terminals of said first set.

3. The integrated circuit of claim 1 wherein the number of terminals of said second set is greater than the number of terminals of said first set.

4. The integrated circuit of claim 1 wherein said integrated circuit is located in a package having a given size, wherein said given size is determined by the size of said integrated circuit, and is greater than the package size required to implement terminals that provide addresses only via a time multiplexed address/data bus.
